# FASCICULE DE BREVET EUROPEEN

(11) **EP 3 126 157 B1**
(45) Date de publication et mention de la délivrance du brevet: **08.05.2019**
(21) Numéro de dépôt: 15711214.5
(22) Date de dépôt: 23.03.2015
(51) Int. Cl.: B60C 9/26, B29D 30/70, B29D 30/30

(54) **ARMATURE DE SOMMET DE PNEUMATIQUE POUR AVION**
FLUGZEUGREIFENGÜRTEL
TIRE BELT FOR AIRCRAFT TIRE

(30) Priorité: 31.03.2014 FR 1452783
(43) Date de publication de la demande: 08.02.2017
(73) Titulaire: Compagnie Générale des Etablissements Michelin, 63000 Clermont-Ferrand (FR)
(72) Inventeur: ROMERO DE LA OSA, Marc, F-63040 Clermont Ferrand Cedex 9 (FR)
(74) Mandataire: Millanvois, Patrick Jacques Jean
(86) Numéro de dépôt international: PCT/EP2015/056054
(87) Numéro de publication internationale: WO 2015/150133

(56) Documents cités:
- FR-A- 1 268 334
- JP-A- H1 134 609
- JP-B2- 3 644 728

## Description

La présente invention concerne un pneumatique pour avion et, en particulier, une armature de sommet de pneumatique pour avion.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

De façon générale, un pneumatique comprend une bande de roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Un pneumatique radial pour avion comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. L'armature de travail conditionne le comportement mécanique global de l'armature de sommet, alors que l'armature de protection protège essentiellement les couches de travail des agressions susceptibles de se propager à travers la bande de roulement radialement vers l'intérieur du pneumatique.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension, telles que le module d'élasticité, l'allongement à rupture et la force à rupture des renforts textiles, sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C, hygrométrie de 65 ± 2%). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Lors de la fabrication d'un pneumatique pour avion, et plus précisément lors de l'étape de pose de l'armature de travail, une couche de travail est le plus souvent obtenue par un enroulement circonférentiel en zigzag ou par un enroulement circonférentiel en spires d'une bandelette, sur une surface cylindrique de pose ayant pour axe de révolution l'axe de rotation du pneumatique. La bandelette est généralement constituée d'au moins un renfort textile continu enrobé dans un mélange élastomérique et, le plus souvent, d'une juxtaposition de renforts textiles parallèles entre eux. Qu'elle soit réalisée par un enroulement circonférentiel en zigzag ou un enroulement circonférentiel en spires, la couche de travail est alors constituée par la juxtaposition de portions de bandelette.

Par enroulement circonférentiel en spires d'une bandelette, on entend un enroulement de la bandelette, selon la direction circonférentielle, et selon une hélice ayant un rayon égal au rayon de la surface cylindrique de pose et un angle moyen, par rapport à la direction circonférentielle, compris entre 0° et 5°. La couche de travail ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°.

Par enroulement circonférentiel en zigzag d'une bandelette, on entend un enroulement de la bandelette, selon la direction circonférentielle, et selon une courbe périodique, c'est-à-dire une courbe formée d'ondulations périodiques oscillant entre des extrema. Enrouler une bandelette selon une courbe périodique signifie que la ligne moyenne de la bandelette, équidistante des bords de la bandelette, coïncide avec la courbe périodique. Lors d'un enroulement circonférentiel en zigzag d'une bandelette, les couches de travail sont posées par paire, chaque paire de couches de travail constituant un binappe de travail. Ainsi un binappe de travail est constitué, en zone courante, c'est-à-dire axialement à l'intérieur de ses extrémités axiales, par deux couches de travail radialement superposées. Au niveau de ses extrémités axiales, un binappe de travail comprend généralement plus de deux couches de travail radialement superposées. On appelle surépaisseur d'extrémité axiale la portion d'extrémité axiale d'un binappe de travail comprenant plus de deux couches de travail radialement superposées. Cette surépaisseur d'extrémité axiale est générée par les croisements de la bandelette, en extrémité de binappe de travail, à chaque tour d'enroulement en zigzag. Une telle armature de travail comprenant des binappes de travail obtenus par un enroulement circonférentiel en zigzag d'une bandelette a été décrite dans les documents EP 0540303, EP 0850787, EP 1163120 et EP 1518666.

Dans le cas d'un enroulement circonférentiel en zigzag, il est connu que les surépaisseurs d'extrémités axiales des binappes de travail, sont particulièrement sensibles à l'apparition de dommages d'endurance, telles que des fissures pouvant évoluer vers une dégradation significative de l'armature de travail et, par conséquent, entraîner une réduction de la durée de vie du pneumatique. Ces fissures apparaissent généralement au niveau des interfaces internes de la surépaisseur d'extrémité axiale, c'est-à-dire entre les couches de travail radialement superposées au niveau de ladite surépaisseur d'extrémité axiale. Ainsi plus le nombre de couches de travail radialement superposées au niveau de la surépaisseur d'extrémité axiale est élevé, plus le nombre d'interfaces internes est important et, par conséquent, plus le risque de fissuration est élevé.

Les documents FR 1268334 A et JP H11 34609A montrent chacun d'entre eux un pneumatique selon le préambule de la revendication 1.

Les inventeurs se sont donnés pour objectif d'améliorer l'endurance de l'armature de travail d'un pneumatique pour avion, en désensibilisant les surépaisseurs d'extrémités axiales des binappes de travail, constitutifs de l'armature de travail, aux risques de fissuration.

Cet objectif a été atteint, selon l'invention, par un pneumatique pour avion, comprenant :
- une armature de travail radialement intérieure à une bande de roulement et radialement extérieure à une armature de carcasse,
- l'armature de travail comprenant au moins un binappe de travail constitué au moins en partie de deux couches de travail radialement superposées,
- chaque couche de travail étant constituée par une juxtaposition de portions d'une bandelette de largeur W,
- la bandelette étant enroulée en zigzag, selon la direction circonférentielle du pneumatique, sur une surface cylindrique de pose de rayon R, ayant pour axe de révolution l'axe de rotation du pneumatique, et selon une courbe périodique,
- la courbe périodique correspondant à la ligne moyenne de la bandelette et formant, avec la direction circonférentielle du pneumatique et dans le plan équatorial du pneumatique, un angle A non nul,
- deux portions de bandelette consécutives, ayant des lignes moyennes respectives comprenant des extrema,
- la distance circonférentielle entre les extrema des lignes moyennes respectives de deux portions de bandelette consécutives étant égale au rapport W/sinA entre la largeur W de la bandelette et le sinus de l'angle A,
- et, pour tout ensemble de trois portions de bandelette consécutives, constitué par une première, une deuxième et une troisième portions de bandelette ayant des lignes moyennes respectives comprenant des extrema, les lignes moyennes respectives des première et troisième portions de bandelette se coupant en un point d'intersection, axialement aligné avec l'extremum de la ligne moyenne de la deuxième portion de bandelette et axialement à l'intérieur dudit extremum à une distance axiale au moins égale à la largeur W de la bandelette.

L'armature de travail d'un pneumatique pour avion de l'état de la technique comprend généralement au moins un binappe de travail constitué au moins en partie de deux couches de travail radialement superposées, c'est-à-dire de deux couches de travail en zone courante, axialement à l'intérieur des surépaisseurs d'extrémités axiales, et plus de deux couches de travail au niveau des surépaisseurs d'extrémités axiales.

Le binappe de travail est généralement constitué par l'enroulement circonférentiel en zigzag d'une bandelette de largeur W, sur une surface cylindrique de pose de rayon R, ayant pour axe de révolution l'axe de rotation du pneumatique, selon une courbe périodique. Plus précisément, le binappe de travail est constitué par l'enroulement d'un nombre N de périodes de longueur circonférentielle P de la courbe périodique sur un nombre T de tours d'enroulement, c'est-à-dire un nombre T de circonférences 2ΠK de la surface cylindrique de pose de rayon R, ce qui se traduit par la relation N*P=T*2ΠR.

Chaque couche de travail est ainsi constituée par une juxtaposition de portions d'une bandelette de largeur W, selon la direction circonférentielle du pneumatique. Deux portions de bandelette consécutives sont juxtaposées, selon la direction circonférentielle, c'est-à-dire en contact jointif l'une avec l'autre. En d'autres termes, deux portions de bandelette consécutives ne sont ni disjointes ni partiellement superposées. Leurs lignes moyennes respectives sont portées par la courbe périodique, selon laquelle est enroulée la bandelette, et ont donc des extrema, qui correspondent aux extrémités axiales de la couche de travail.

Selon l'invention, la distance circonférentielle entre les extrema des lignes moyennes respectives de deux portions de bandelette consécutives est égale au rapport W/sinA entre la largeur W de la bandelette et le sinus de l'angle A, c'est-à-dire à la largeur de la bandelette projetée sur la direction circonférentielle du pneumatique. En effet, la bandelette a une largeur W mesurée perpendiculairement à sa ligne moyenne, ladite ligne moyenne formant un angle A , avec la direction circonférentielle du pneumatique et dans le plan équatorial du pneumatique. Cette caractéristique géométrique implique que deux portions de bandelettes consécutives sont adjacentes et jointives.

Encore selon l'invention, pour tout ensemble de trois portions de bandelette consécutives, constitué par une première, une deuxième et une troisième portions de bandelette ayant des lignes moyennes respectives comprenant des extrema, les lignes moyennes respectives des première et troisième portions de bandelette se coupent en un point d'intersection, axialement aligné avec l'extremum de la ligne moyenne de la deuxième portion de bandelette et axialement à l'intérieur dudit extremum à une distance axiale au moins égale à la largeur W de la bandelette. Cette caractéristique géométrique garantit que le nombre maximal de portions de bandelette radialement superposées au niveau des extrémités axiales du binappe de travail est égal à deux. Il en résulte que le nombre maximal de couches de travail radialement superposées au niveau des extrémités axiales du binappe de travail est égal à deux, comme en zone courante, c'est-à-dire qu'il n'y a pas de surépaisseur d'extrémité axiale. En d'autres termes, le binappe de travail comprend deux couches de travail radialement superposées sur toute sa largeur axiale, sans surépaisseur d'extrémité axiale. Par conséquent, par rapport à un pneumatique de l'état de la technique comprenant des surépaisseurs d'extrémités axiales, le nombre d'interfaces internes entre couches de travail étant moindre aux extrémités axiales du binappe de travail, le risque de fissuration est plus faible et l'endurance de l'armature de sommet est améliorée.

Le point d'intersection entre les lignes moyennes respectives des première et troisième portions de bandelette est positionné axialement à l'intérieur de l'extremum de la ligne moyenne de la deuxième portion de bandelette à une distance axiale au plus égale à deux fois la largeur W de la bandelette. En extrémité axiale du binappe de travail, en raison des changements de direction de la trajectoire de la bandelette, la rigidité du binappe de travail est différente de la rigidité du binappe de travail en zone courante, constante car dépendante de l'angle constant A. Cette caractéristique permet ainsi de limiter la largeur axiale de la zone d'extrémité axiale dans laquelle la rigidité varie et donc de maximiser la portion de binappe de travail à rigidité constante.

Selon un mode de réalisation particulier, dans lequel la courbe périodique, support de la ligne moyenne de toute portion de bandelette, comprend, au niveau de ses extrema, une portion circulaire concave de rayon R₁, le point d'intersection entre les lignes moyennes respectives des première et troisième portions de bandelette est avantageusement positionné axialement à l'intérieur de l'extremum de la ligne moyenne de la deuxième portion de bandelette à une distance axiale égale à R₁*(1-cosB) avec B=asin((W/sinA)/R₁). Une portion circulaire concave de rayon R₁ est telle que le centre du cercle de rayon R₁ est axialement intérieur à l'extremum. B représente l'angle au centre, formé par les 2 droites passant par le centre de la portion circulaire concave et respectivement par l'extremum de la ligne moyenne de la première portion de bandelette et par le point d'intersection entre les lignes moyennes respectives des première et troisième portions de bandelette. Dans ce cas particulier, la distance axiale R₁*(1-cosB) avec B=asin((W/sinA)/R₁) doit au moins être égale à la largeur W de la bandelette.

Le ratio R₁/W entre le rayon R₁ de la portion circulaire concave de la courbe périodique et la largeur W de la bandelette est avantageusement au moins égal à 10. En d'autres termes, le rayon de courbure R₁ doit être suffisamment grand par rapport à la largeur W de bandelette. Cette valeur minimale permet d'éviter le risque de flambage de la bandelette hors de son plan au cours de la pose de la bandelette en fabrication, lors des changements de direction au niveau des extrema de la courbe périodique.

Selon l'invention, toute portion de la courbe périodique, s'étendant axialement vers l'intérieur depuis un extremum de la courbe périodique jusqu'à un point du plan équatorial du pneumatique, comprend une première portion circulaire concave de rayon R₁, s'étendant axialement vers l'intérieur depuis l'extremum jusqu'à une deuxième portion circulaire convexe de rayon R₂, la deuxième portion circulaire convexe s'étendant axialement vers l'intérieur jusqu'à une troisième portion rectiligne formant un angle A avec la direction circonférentielle, la troisième portion rectiligne s'étendant axialement vers l'intérieur jusqu'au point du plan équatorial du pneumatique. La portion de la courbe périodique, constituée par l'ensemble des première, deuxième et troisième portions précédemment décrites, correspond à un quart de période de la courbe périodique. Ce quart de période de la courbe périodique comprend ainsi, depuis l'extremum jusqu'au plan équatorial, une portion circulaire concave, reliée à une portion circulaire convexe, c'est-à-dire inversée par rapport à la portion circulaire précédente, cette portion circulaire convexe étant reliée à une portion rectiligne formant un angle A avec le plan équatorial. Le centre de coubure de la portion circulaire convexe est axialement extérieur à la courbe périodique. On dit alors que que la coube périodique présente, au niveau de chaque extremum, une double courbure, c'est-à-dire une courbure concave suivie d'une courbure convexe.

Le rayon R₂ de la deuxième portion circulaire convexe de la courbe périodique est avantageusement égal au rayon R₁ de la première portion circulaire concave de la courbe périodique. Cette caractéristique permet d'optimiser simultanément les ratios R₁/W et R₂/W.

L'angle A formé par la courbe périodique, avec la direction circonférentielle du pneumatique et dans le plan équatorial du pneumatique, est encore avantageusement au moins égal à 5°. Un angle A minimum de 5° garantit une rigidité de dérive minimale pour le pneumatique.

L'angle A formé par la courbe périodique, avec la direction circonférentielle du pneumatique et dans le plan équatorial du pneumatique, est également avantageusement au plus égal à 20°. Au-delà d'un angle A égal à 20°, la rigidité de dérive du pneumatique pour avion devient trop importante pour la performance recherchée.

La largeur W de la bandelette est avantageusement au moins égale à 2 mm, de préférence au moins égale à 6 mm. Une valeur minimale de largeur de bandelette est nécessaire à la fois pour la faisabilité technologique de la bandelette et pour la productivité de pose de la bandelette. Par ailleurs, plus la largeur de bandelette est proche de cette valeur minimale, plus le rayon de courbure R₁ à l'extrémité axiale du binappe de travail peut être réduit, ce qui permet en particulier de réduire la largeur axiale de l'extrémité axiale du binappe de travail, dont la rigidité est différente de celle de la zone courante du binappe de travail.

La largeur W de la bandelette est encore avantageusement au plus égale à 20 mm, de préférence au plus égale à 14 mm. Une valeur maximale de largeur de bandelette permet de réduire le nombre de tours de pose en zig-zag de la bandelette, nécessaire à la réalisation du binappe de travail, d'où une réduction du temps nécessaire à la réalisation du binappe de travail et donc un gain de productivité.

La bandelette étant constituée de renforts enrobés dans un mélange élastomérique, la bandelette comprend, selon une première variante de réalisation, des renforts constitués d'un matériau textile, de préférence d'un polyamide aliphatique. En effet, les renforts textiles, en particulier en polyamide aliphatique tel que le nylon, ont une masse relativement faible par rapport à des renforts métalliques, ce qui permet un gain significatif sur la masse du pneumatique et donc sur la charge utile de l'avion.

La bandelette étant constituée de renforts enrobés dans un mélange élastomérique, la bandelette comprend, selon une deuxième variante de réalisation, des renforts constitués d'un polyamide aromatique. Les renforts en polyamide aromatique, tel que l'aramide, permettent en effet d'obtenir un bon compromis entre une résistance mécanique élevée et une masse faible.

La bandelette étant constituée de renforts enrobés dans un mélange élastomérique, la bandelette comprend, selon une troisième variante de réalisation, des renforts hybrides constitués d'une combinaison d'un polyamide aliphatique et d'un polyamide aromatique. De tels renforts sont usuellement appelés renforts hybrides et présentent les avantages techniques du nylon et de l'aramide : résistance mécanique élevée, déformabilité en traction importante et masse faible.

L'invention concerne également un procédé de fabrication d'un pneumatique pour avion, comprenant une étape de fabrication du binappe de travail, dans laquelle le binappe de travail est obtenu par l'enroulement circonférentiel en zigzag d'une bandelette de largeur W, sur une surface cylindrique de pose de rayon R, ayant pour axe de révolution l'axe de rotation du pneumatique, selon une courbe périodique. La courbe périodique forme, avec la direction circonférentielle du pneumatique et dans le plan équatorial du pneumatique, un angle A non nul, et comprend des extrema. Selon l'invention, deux portions de bandelette consécutives ayant des lignes moyennes respectives comprenant des extrema, la distance circonférentielle entre les extrema des lignes moyennes respectives de deux portions de bandelette consécutives est égale au rapport W/sinA entre la largeur W de la bandelette et le sinus de l'angle A, et, pour tout ensemble de trois portions de bandelette consécutives, constitué par une première, une deuxième et une troisième portions ayant des lignes moyennes respectives comprenant des extrema, les lignes moyennes respectives des première et troisième portions de bandelette se coupent en un point d'intersection, axialement aligné avec l'extremum de la ligne moyenne de la deuxième portion de bandelette et axialement à l'intérieur dudit extremum à une distance axiale au moins égale à la largeur W de la bandelette .

Les caractéristiques et autres avantages de l'invention seront mieux compris à l'aide des figures suivantes 1 à 5, non représentées à l'échelle :
- Figure 1 : demi-vue en coupe d'un pneumatique pour avion selon l'invention, dans un plan radial (YZ) passant par l'axe de rotation (YY') du pneumatique.
- Figure 2 : vue en perspective d'une bandelette, constitutive d'un binappe de travail d'un pneumatique de l'état de la technique, enroulée circonférentiellement en zigzag, selon une courbe périodique, sur une surface cylindrique de pose.
- Figure 3 : vue développée d'une bandelette, constitutive d'un binappe de travail d'un pneumatique de l'état de la technique, enroulée circonférentiellement en zigzag, selon une courbe périodique, après la pose d'une période.
- Figure 4 : vue développée d'une bandelette, constitutive d'un binappe de travail d'un pneumatique selon l'invention, enroulée circonférentiellement en zigzag, selon une courbe périodique, après la pose d'une période.
- Figure 5 : vue de détail d'une zone d'extrémité axiale d'un pneumatique selon l'invention, présentant un ensemble de trois portions de bandelettes consécutives.

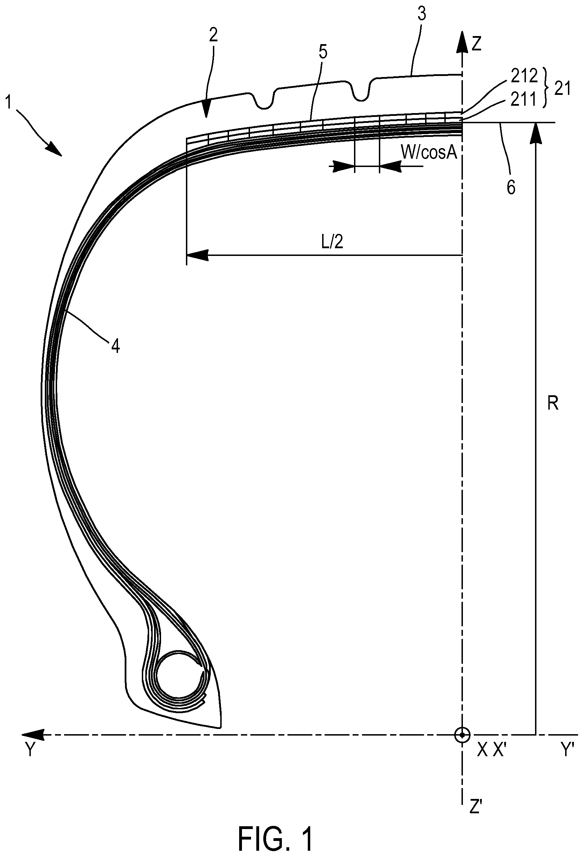

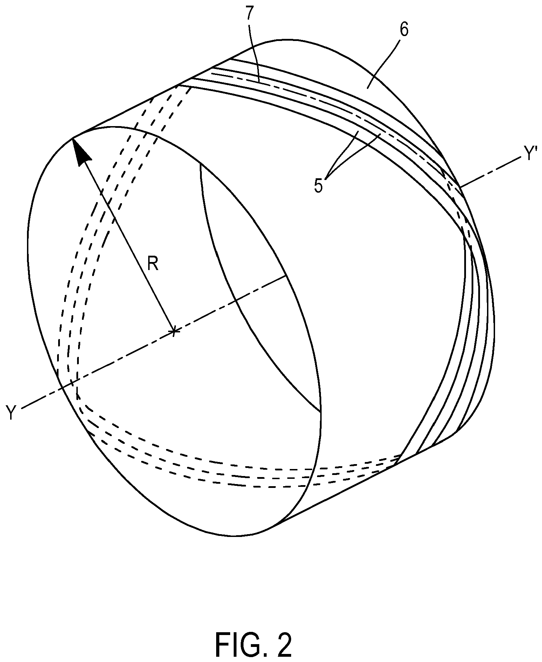

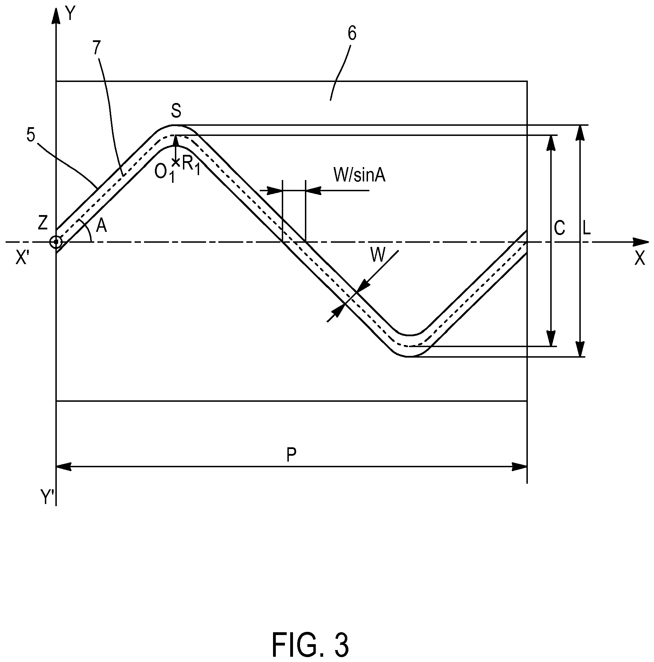

La figure 1 représente une demi-vue en coupe, dans un plan radial (YZ), d'un pneumatique 1 pour avion de l'état de la technique, comprenant une armature de travail 2 radialement intérieure à une bande de roulement 3 et radialement extérieure à une armature de carcasse 4. Dans l'exemple représenté, l'armature de travail 2 comprend un binappe de travail 21, constitué de deux couches de travail (211, 212) radialement superposées, et obtenu par l'enroulement circonférentiel en zigzag (voir figure 2) d'une bandelette de largeur W, sur une surface cylindrique de pose 6 de rayon R, ayant pour axe de révolution l'axe de rotation (YY') du pneumatique. Les surépaisseurs d'extrémités axiales du binappe de travail 21 ne sont pas représentées, par souci de simplification.Dans un plan radial, chaque couche de travail (211, 212) est constituée par une juxtaposition axiale de portions de bandelette 5 de largeur W/cosA, où W est la largeur de la bandelette 5, mesurée perpendiculairement à sa ligne moyenne, et A est l'angle (voir figure 3) formé par la ligne moyenne de la bandelette 5, avec la direction circonférentielle (XX'), dans le plan équatorial (XZ). La largeur du binappe de travail étant égale à L, sa demi-largeur L/2 est représentée sur la figure 1.

La figure 2 est une vue en perspective d'une bandelette 5, constitutive d'un binappe de travail d'un pneumatique de l'état de la technique, enroulée circonférentiellement en zigzag, selon une courbe périodique 7, sur une surface cylindrique de pose 6, de révolution autour de l'axe de rotation (YY') du pneumatique, ayant un rayon R. Sur la figure 2 sont représentés uniquement 3 tours d'enroulement de la bandelette 5, c'est-à-dire une couche de travail en cours de réalisation.

La figure 3 est une vue développée d'une bandelette 5 enroulée circonférentiellement en zigzag, selon une courbe périodique 7, après la pose d'une période, dans le cas d'un pneumatique de l'état de la technique. La bandelette 5 est posée sur une surface cylindrique 6 de circonférence 2ΠR, représentée sous forme développée sur la figure 3. La ligne moyenne de la bandelette 5 suit une courbe périodique 7, formant un angle A avec la direction circonférentielle XX'. La bandelette 5 a une largeur W mesurée perpendiculairement à la ligne moyenne de la bandelette portée par la courbe périodique 7. Elle comprend en outre des extrema S caractérisés par un rayon de courbure R₁. En S, la courbure est dite concave, car le centre de courbure O₁ est axialement intérieur à l'extremum S. La courbe périodique 7 a une période P égale à la circonférence 2ΠR majorée ou minorée de W/sin A, où W/sinA est la largeur de la bandelette 5, projetée sur la direction circonférentielle XX'. Par ailleurs la courbe périodique 7 a une amplitude C, qui, majorée par la largeur W de la bandelette, définit la largeur L=C+W du binappe de travail.

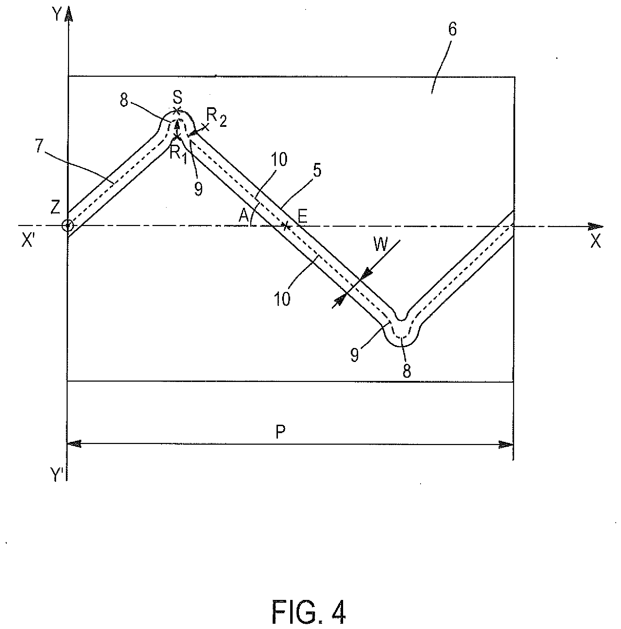

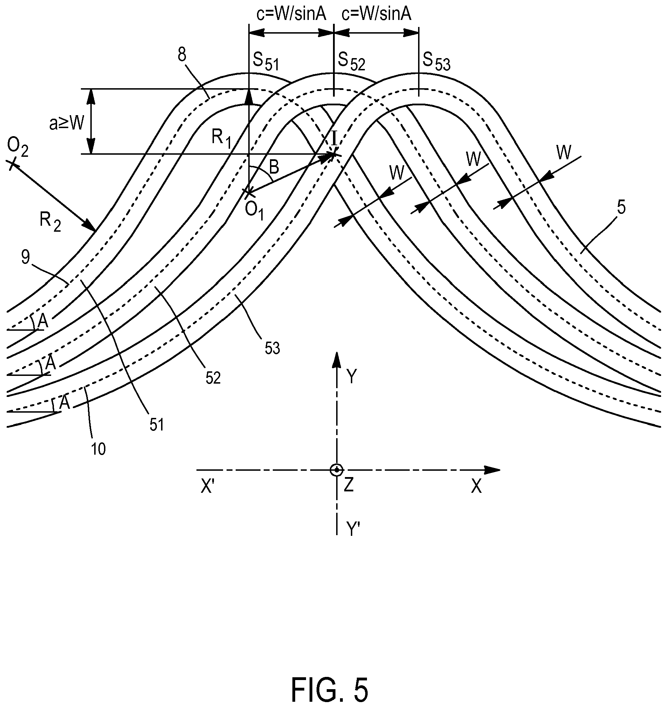

La figure 4 est une vue développée d'une bandelette 5 enroulée circonférentiellement en zigzag, selon une courbe périodique 7, après la pose d'une période, dans le cas d'un pneumatique selon l'invention. La bandelette 5 est posée sur une surface cylindrique 6 de circonférence 2ΠR, représentée sous forme développée sur la figure 3. La ligne moyenne de la bandelette 5 suit une courbe périodique 7, formant un angle A avec la direction circonférentielle XX'. La bandelette 5 a une largeur W mesurée perpendiculairement à la ligne moyenne de la bandelette portée par la courbe péridique 7. La bandelette est telle que toute portion de la courbe périodique 7, s'étendant axialement vers l'intérieur depuis un extremum S de la courbe périodique 7 jusqu'à un point E du plan équatorial XZ du pneumatique, comprend une première portion circulaire concave 8 de rayon R₁, s'étendant axialement vers l'intérieur depuis l'extremum S jusqu'à une deuxième portion circulaire convexe 9 de rayon R₂, la deuxième portion circulaire convexe 9 de rayon R₂ s'étendant axialement vers l'intérieur jusqu'à une troisième portion rectiligne 10 formant un angle A avec la direction circonférentielle XX', la troisième portion rectiligne 10 s'étendant axialement vers l'intérieur jusqu'au point E du plan équatorial XZ du pneumatique. La première portion circulaire 8 de rayon R₁ est concave car le centre O₁ (voir figure 5) est axialement intérieur à la courbe périodique 7. La deuxième portion circulaire 9 de rayon R₂ est convexe car le centre O₂ (voir figure 5) est axialement extérieur à la courbe périodique 7.

La figure 5 représente une zone d'extrémité axiale d'un pneumatique selon l'invention. Elle présente plus particulièrement un ensemble de trois portions de bandelette (51, 52, 53) consécutives, constitué par une première, une deuxième et une troisième portions ayant des lignes moyennes respectives comprenant des extrema (S₅₁, S₅₂, S₅₃). Les lignes moyennes respectives de chacune des portions de bandelette comprennent une première portion circulaire concave 8 de rayon R₁ et de centre O₁, une deuxième portion circulaire convexe 9 de rayon R₂ et de centre O₂, et une troisième portion rectiligne 10 formant un angle A avec la direction circonférentielle XX'. La distance circonférentielle c entre les extrema (S₅₁, S₅₂, S₅₃) des lignes moyennes respectives de deux portions de bandelette (51, 52, 53) consécutives est égale au rapport W/sinA entre la largeur W de la bandelette 5 et le sinus de l'angle A. Les lignes moyennes respectives des première et troisième portions de bandelette (51, 53) se coupent en un point d'intersection I, axialement aligné avec l'extremum S₅₂ de la ligne moyenne de la deuxième portion de bandelette 52 et axialement à l'intérieur dudit extremum S₅₂ à une distance axiale a au moins égale à la largeur W de la bandelette 5. Dans le mode de réalisation préféré représenté sur la figure 5, la courbe périodique 7 comprenant, au niveau de ses extrema (S₅₁, S₅₂, S₅₃), une portion circulaire 8 de rayon R₁, le point d'intersection I entre les lignes moyennes respectives des première et troisième portions de bandelette (51, 53) est positionné axialement à l'intérieur de l'extremum S₅₂ de la ligne moyenne de la deuxième portion de bandelette 52 à une distance axiale a égale à R₁*(1-cosB) avec B=asin((W/sinA)/R₁). La figure 5 n'est pas représentée à l'échelle : les trois portions de bandelettes consécutives sont jointes en zone courante et leurs extrémités axiales respectives comprennent entre elles des vides moins importants que ceux représentés sur la figure 5.

Les inventeurs ont réalisé l'invention pour un pneumatique pour avion de dimension 1400X530 R 23 dont l'armature de travail comprend 3 binappes superposés, respectivement radialement de l'intérieur vers l'extérieur, BF1, BF2 et BF3, dont les caractéristiques de géométrie et de pose sont présentées dans le tableau 1 ci-dessous :

**Tableau 1**

| Binappe de travail | BF1 | BF2 | BF3 |
|---|---|---|---|
| Largeur axiale L (mm) | 390 mm | 370 mm | 350 mm |
| Largeur bandelette W (mm) | 11.3 mm | 11.3 mm | 11.3 mm |
| Angle A (°) | 9.1° | 9.05° | 9.0° |
| Rayon R₁ de la première portion circulaire concave (mm) | 220 mm | 220 mm | 220 mm |
| Rayon R₂ de la deuxième portion circulaire convexe(mm) | 220 mm | 220 mm | 220 mm |
| Circonférence de pose 2ΠR (mm) | 4076 mm | 4096 mm | 4115 mm |
| Rayon de pose R (mm) | 649 mm | 652 mm | 655 mm |
| Circonférence de pose 2ΠR (mm) | 4076 mm | 4095 mm | 4113 mm |
| Nombre de périodes N | 1 | 1 | 1 |
| Nombre de tours d'enroulement T | 58 | 58 | 58 |

L'armature de sommet d'un pneumatique pour avion selon l'invention, par rapport à celle d'un pneumatique de référence de l'état de la technique, subit des dommages plus tardifs et de moindre gravité, lors d'un roulage du pneumatique dans des conditions de test sévères, telles que celles du test TSO (Technical Standard Order) imposé par une norme FAA (Fédéral Aviation Administration).

L'objectif du test TSO est de réaliser des phases de cycles d'utilisation sans dommage pour le pneumatique, le déchapage du pneumatique, c'est-à-dire la perte de la bande de roulement, étant toutefois permis au cours du dernier cycle, mais pas la perte de pression.

Le test TSO est un test, réalisé sur un volant, qui se décompose en 4 phases:
- 50 cycles de décollage de l'avion, dans lesquels le pneumatique est soumis à la pression nominale Pᵥ et à une charge variant entre la charge nominale Zₙ et 0.
- 8 cycles de roulage taxi de l'avion, dans lesquels le pneumatique est soumis à la pression nominale Pᵥ, à la charge nominale Zₙ et à une vitesse d'environ 65 km/h pendant environ 10700 m.
- 2 cycles de roulage taxi de l'avion, dans lesquels le pneumatique est soumis à la pression nominale Pᵥ, à 1,2 fois la charge nominale Zₙ et à une vitesse d'environ 65 km/h pendant environ 10700 m.
- 1 cycle de décollage de l'avion surchargé dans lequel le pneumatique est soumis à la pression nominale Pᵥ et à une charge variant entre 1,5 fois la charge nominale Zₙ et 0.

Cette invention est applicable non seulement à tout binappe de travail de l'armature de sommet d'un pneumatique pour avion, mais aussi, plus généralement, à tout binappe de l'armature de sommet, tel que, par exemple, un binappe de protection de l'armature de protection.

Elle est également applicable à tout pneumatique comprenant une armature de sommet avec au moins un binappe obtenu par un enroulement en zigzag d'une bandelette, tel que, par exemple et de façon non exhaustive, un pneumatique pour métro.

## Revendications

1. Pneumatique (1) pour avion comprenant:
- une armature de travail (2) radialement intérieure à une bande de roulement (3) et radialement extérieure à une armature de carcasse (4),
- l'armature de travail (2) comprenant au moins un binappe de travail (21) constitué au moins en partie de deux couches de travail (211, 212) radialement superposées,
- chaque couche de travail (211, 212) étant constituée par une juxtaposition de portions (51, 52, 53) d'une bandelette (5) de largeur W,
- la bandelette (5) étant enroulée en zigzag, selon la direction circonférentielle (XX') du pneumatique, sur une surface cylindrique de pose (6) de rayon R, ayant pour axe de révolution l'axe de rotation (YY') du pneumatique, et selon une courbe périodique (7),
- la courbe périodique (7) correspondant à la ligne moyenne de la bandelette (5) et formant, avec la direction circonférentielle (XX') du pneumatique et dans le plan équatorial (XZ) du pneumatique, un angle A non nul,
- deux portions de bandelette (51, 52, 53) consécutives, ayant chacune des lignes moyennes respectives comprenant des extrema (S₅₁, S₅₂, S₅₃),
- la distance circonférentielle (c) entre les extrema (S₅₁, S₅₂, S₅₃) des lignes moyennes respectives de deux portions de bandelette (51, 52, 53) consécutives étant égale au rapport W/sinA entre la largeur W de la bandelette (5) et le sinus de l'angle A,
- pour tout ensemble de trois portions de bandelette (51, 52, 53) consécutives, constitué par une première, une deuxième et une troisième portions ayant des lignes moyennes respectives comprenant des extrema (S₅₁, S₅₂, S₅₃), les lignes moyennes respectives des première et troisième portions de bandelette (51, 53) se coupant en un point d'intersection (I), axialement aligné avec l'extremum (S₅₂) de la ligne moyenne de la deuxième portion de bandelette (52) et axialement à l'intérieur dudit extremum (S₅₂) à une distance axiale (a) au moins égale à la largeur W de la bandelette (5),
**caractérisé en ce que** toute portion de la courbe périodique (7), s'étendant axialement vers l'intérieur depuis un extremum (S) de la courbe périodique (7) jusqu'à un point (E) du plan équatorial (XZ) du pneumatique, comprend une première portion circulaire concave (8) de rayon R₁, s'étendant axialement vers l'intérieur depuis l'extremum (S) jusqu'à une deuxième portion circulaire convexe (9) de rayon R₂, la deuxième portion circulaire convexe (9) de rayon R₂ s'étendant axialement vers l'intérieur jusqu'à une troisième portion rectiligne (10) formant un angle A avec la direction circonférentielle (XX'), la troisième portion rectiligne (10) s'étendant axialement vers l'intérieur jusqu'au point (E) du plan équatorial (XZ) du pneumatique.

2. Pneumatique (1) pour avion selon la revendication 1, **dans lequel** le point d'intersection (I) entre les lignes moyennes respectives des première et troisième portions de bandelette (51, 53) est positionné axialement à l'intérieur de l'extremum (S₅₂) de la ligne moyenne de la deuxième portion de bandelette (52) à une distance axiale (a) au plus égale à deux fois la largeur W de la bandelette (5).

3. Pneumatique (1) pour avion selon l'une des revendications 1 ou 2, la courbe périodique (7) comprenant, au niveau de ses extrema (S₅₁, S₅₂, S₅₃), une portion circulaire (8) de rayon R₁, **dans lequel** le point d'intersection (I) entre les lignes moyennes respectives des première et troisième portions de bandelette (51, 53) est positionné axialement à l'intérieur de l'extremum (S₅₂) de la ligne moyenne de la deuxième portion de bandelette (52) à une distance axiale (a) égale à R₁*(1-cosB) avec B=asin((W/sinA)/R₁).

4. Pneumatique (1) pour avion selon la revendication 3, **dans lequel** le ratio R₁/W entre le rayon R₁ de la portion circulaire concave (8) de la courbe périodique (7) et la largeur W de la bandelette (5) est au moins égal à 10.

5. Pneumatique (1) pour avion selon l'une quelconque des revendications 1 à 4, **dans lequel** le rayon R₂ de la deuxième portion circulaire convexe (9) de la courbe périodique (7) est égal au rayon R₁ de la première portion circulaire concave (8) de la courbe périodique (7).

6. Pneumatique (1) pour avion selon l'une quelconque des revendications 1 à 5, **dans lequel** l'angle A formé par la courbe périodique (7), avec la direction circonférentielle (XX') du pneumatique et dans le plan équatorial (XZ) du pneumatique, est au moins égal à 5°.

7. Pneumatique (1) pour avion selon l'une quelconque des revendications 1 à 6, **dans lequel** l'angle A formé par la courbe périodique (7), avec la direction circonférentielle (XX') du pneumatique et dans le plan équatorial (XZ) du pneumatique, est au plus égal à 20°.

8. Pneumatique (1) pour avion selon l'une quelconque des revendications 1 à 7, **dans lequel** la largeur W de la bandelette (5) est au moins égale à 2 mm, de préférence au moins égale à 6 mm.

9. Pneumatique (1) pour avion selon l'une quelconque des revendications 1 à 8, **dans lequel** la largeur W de la bandelette (5) est au plus égale à 20 mm, de préférence au plus égale à 14 mm.

10. Pneumatique (1) pour avion selon l'une quelconque des revendications 1 à 9, la bandelette (5) étant constituée de renforts enrobés dans un mélange élastomérique, **dans lequel** la bandelette (5) comprend des renforts constitués d'un matériau textile, de préférence d'un polyamide aliphatique.

11. Pneumatique (1) pour avion selon l'une quelconque des revendications 1 à 9, la bandelette (5) étant constituée de renforts enrobés dans un mélange élastomérique, **dans lequel** la bandelette (5) comprend des renforts constitués d'un polyamide aromatique.

12. Pneumatique (1) pour avion selon l'une quelconque des revendications 1 à 9, la bandelette (5) étant constituée de renforts enrobés dans un mélange élastomérique, **dans lequel** la bandelette (5) comprend des renforts hybrides constitués d'une combinaison d'un polyamide aliphatique et d'un polyamide aromatique.

13. Procédé de fabrication d'un pneumatique (1) pour avion selon l'une quelconque des revendications 1 à 12, comprenant une étape de fabrication du binappe de travail (21), **dans laquelle** la bandelette (5) est enroulée en zigzag, selon la direction circonférentielle (XX') du pneumatique, sur une surface cylindrique de pose (6) de rayon R, ayant pour axe de révolution l'axe de rotation (YY') du pneumatique, et selon une courbe périodique (7), correspondant à la ligne moyenne de la bandelette (5) et formant, avec la direction circonférentielle (XX') du pneumatique et dans le plan équatorial (XZ) du pneumatique, un angle A non nul, de telle sorte que:
- deux portions de bandelette (51, 52, 53) consécutives ayant des lignes moyennes respectives comprenant des extrema (S₅₁, S₅₂, S₅₃), la distance circonférentielle (c) entre les extrema (S₅₁, S₅₂, S₅₃) des lignes moyennes respectives de deux portions de bandelette (51, 52, 53) consécutives est égale au rapport W/sinA entre la largeur W de la bandelette (5) et le sinus de l'angle A,
- -pour tout ensemble de trois portions de bandelette (51, 52, 53) consécutives, constitué par une première, une deuxième et une troisième portions ayant des lignes moyennes respectives comprenant des extrema (S₅₁, S₅₂, S₅₃), les lignes moyennes respectives des première et troisième portions de bandelette (51, 53) se coupent en un point d'intersection (I), axialement aligné avec l'extremum (S₅₂) de la ligne moyenne de la deuxième portion de bandelette (52) et axialement à l'intérieur dudit extremum (S₅₂) à une distance axiale (a) au moins égale à la largeur W de la bandelette (5),
- et, toute portion de la courbe périodique (7), s'étendant axialement vers l'intérieur depuis un extremum (S) de la courbe périodique (7) jusqu'à un point (E) du plan équatorial (XZ) du pneumatique, comprend une première portion circulaire concave (8) de rayon R₁, s'étendant axialement vers l'intérieur depuis l'extremum (S) jusqu'à une deuxième portion circulaire convexe (9) de rayon R₂, la deuxième portion circulaire convexe (9) de rayon R₂ s'étendant axialement vers l'intérieur jusqu'à une troisième portion rectiligne (10) formant un angle A avec la direction circonférentielle (XX'), la troisième portion rectiligne (10) s'étendant axialement vers l'intérieur jusqu'au point (E) du plan équatorial (XZ) du pneumatique.

## Patentansprüche

1. Luftreifen (1) für ein Flugzeug, der enthält:
- eine Arbeitsbewehrung (2) radial innen bezüglich eines Laufstreifens (3) und radial außen bezüglich einer Karkassenbewehrung (4),
- wobei die Arbeitsbewehrung (2) mindestens eine Arbeitsdoppellage (21) enthält, die zumindest zum Teil aus zwei radial übereinanderliegenden Arbeitsschichten (211, 212) besteht,
- wobei jede Arbeitsschicht (211, 212) aus einer Nebeneinanderanordnung von Teilen (51, 52, 53) eines Streifens (5) einer Breite W besteht,
- wobei der Streifen (5) zickzackförmig gemäß der Umfangsrichtung (XX') des Luftreifens auf eine zylindrische Verlegefläche (6) mit einem Radius R, die als Drehsymmetrieachse die Drehachse (YY') des Luftreifens hat, und gemäß einer periodischen Kurve (7) gewickelt ist,
- wobei die periodische Kurve (7) der Mittellinie des Streifens (5) entspricht und mit der Umfangsrichtung (XX') des Luftreifens und in der Äquatorialebene (XZ) des Luftreifens einen Winkel A ungleich Null bildet,
- zwei aufeinanderfolgende Streifenteile (51, 52, 53) je Mittellinien haben, die Extrema (S₅₁, S₅₂, S₅₃) enthalten,
- der Umfangsabstand (c) zwischen den Extrema (S₅₁, S₅₂, S₅₃) der jeweiligen Mittellinien von zwei aufeinanderfolgenden Streifenteilen (51, 52, 53) gleich dem Verhältnis W/sinA zwischen der Breite W des Streifens (5) und dem Sinus des Winkels A ist,
- für jede Einheit von drei aufeinanderfolgenden Streifenteilen (51, 52, 53), die aus einem ersten, einem zweiten und einem dritten Teil besteht, die jeweilige Mittellinien haben, die Extrema (S₅₁, S₅₂, S₅₃) enthalten, die jeweiligen Mittellinien der ersten und dritten Streifenteile (51, 53) sich an einem Schnittpunkt (I) schneiden, der axial mit dem Extremum (S₅₂) der Mittellinie des zweiten Streifenteils (52) ausgerichtet ist und sich axial innerhalb des Extremums (S₅₂) in einem axialen Abstand (a) mindestens gleich der Breite W des Streifens (5) befindet,
**dadurch gekennzeichnet, dass** jeder Teil der periodischen Kurve (7), der sich von einem Extremum (S) der periodischen Kurve (7) bis zu einem Punkt (E) der Äquatorialebene (XZ) des Luftreifens axial nach innen erstreckt, einen ersten konkaven runden Teil (8) mit einem Radius R₁ enthält, der sich vom Extremum (S) bis zu einem zweiten konvexen runden Teil (9) mit einem Radius R₂ axial nach innen erstreckt, wobei der zweite konvexe runde Teil (9) mit einem Radius R₂ sich bis zu einem dritten geradlinigen Teil (10) axial nach innen erstreckt, der einen Winkel A mit der Umfangsrichtung (XX') bildet, wobei der dritte geradlinige Teil (10) sich bis zum Punkt (E) der Äquatorialebene (XZ) des Luftreifens axial nach innen erstreckt.

2. Luftreifen (1) für ein Flugzeug nach Anspruch 1, wobei der Schnittpunkt (I) zwischen den jeweiligen Mittellinien der ersten und dritten Streifenteile (51, 53) axial innerhalb des Extremums (S₅₂) der Mittellinie des zweiten Streifenteils (52) in einem axialen Abstand (a) höchstens gleich dem Doppelten der Breite W des Streifens (5) positioniert ist.

3. Luftreifen (1) für ein Flugzeug nach einem der Ansprüche 1 oder 2, wobei die periodische Kurve (7) im Bereich ihrer Extrema (S₅₁, S₅₂, S₅₃) einen runden Teil (8) mit einem Radius R₁ enthält, wobei der Schnittpunkt (I) zwischen den jeweiligen Mittellinien der ersten und dritten Streifenteile (51, 53) axial innerhalb des Extremums (S₅₂) der Mittellinie des zweiten Streifenteils (52) in einem axialen Abstand (a) gleich R₁*(1-cosB) mit B=asin((W/sinA)/R₁) positioniert ist.

4. Luftreifen (1) für ein Flugzeug nach Anspruch 3, wobei das Verhältnis R₁/W zwischen dem Radius R₁ des konkaven runden Teils (8) der periodischen Kurve (7) und der Breite W des Streifens (5) mindestens gleich 10 ist.

5. Luftreifen (1) für ein Flugzeug nach einem der Ansprüche 1 bis 4, wobei der Radius R₂ des zweiten konvexen runden Abschnitts (9) der periodischen Kurve (7) gleich dem Radius R₁ des ersten konkaven runden Teils (8) der periodischen Kurve (7) ist.

6. Luftreifen (1) für ein Flugzeug nach einem der Ansprüche 1 bis 5, wobei der von der periodischen Kurve (7) mit der Umfangsrichtung (XX') des Luftreifens und in der Äquatorialebene (XZ) des Luftreifens gebildete Winkel A mindestens gleich 5° ist.

7. Luftreifen (1) für ein Flugzeug nach einem der Ansprüche 1 bis 6, wobei der von der periodischen Kurve (7) mit der Umfangsrichtung (XX') des Luftreifens und in der Äquatorialebene (XZ) des Luftreifens gebildete Winkel A höchstens gleich 20° ist.

8. Luftreifen (1) für ein Flugzeug nach einem der Ansprüche 1 bis 7, wobei die Breite W des Streifens (5) mindestens gleich 2 mm, vorzugsweise mindestens gleich 6 mm ist.

9. Luftreifen (1) für ein Flugzeug nach einem der Ansprüche 1 bis 8, wobei die Breite W des Streifens (5) höchstens gleich 20 mm, vorzugsweise höchstens gleich 14 mm ist.

10. Luftreifen (1) für ein Flugzeug nach einem der Ansprüche 1 bis 9, wobei der Streifen (5) aus mit einer Elastomermischung umhüllten Verstärkungen besteht, wobei der Streifen (5) Verstärkungen enthält, die aus einem Textilmaterial, vorzugsweise einem aliphatischen Polyamid, bestehen.

11. Luftreifen (1) für ein Flugzeug nach einem der Ansprüche 1 bis 9, wobei der Streifen (5) aus mit einer Elastomermischung umhüllten Verstärkungen besteht, wobei der Streifen (5) Verstärkungen enthält, die aus einem aromatischen Polyamid bestehen.

12. Luftreifen (1) für ein Flugzeug nach einem der Ansprüche 1 bis 9, wobei der Streifen (5) aus mit einer Elastomermischung umhüllten Verstärkungen besteht, wobei der Streifen (5) hybride Verstärkungen enthält, die aus einer Kombination eines aliphatischen Polyamids und eines aromatischen Polyamids bestehen.

13. Verfahren zur Herstellung eines Luftreifens (1) für ein Flugzeug nach einem der Ansprüche 1 bis 12, das einen Schritt der Herstellung der Arbeitsdoppellage (21) enthält, in dem der Streifen (5) gemäß der Umfangsrichtung (XX') des Luftreifens auf eine zylindrische Verlegefläche (6) mit einem Radius R, die als Drehsymmetrieachse die Drehachse (YY') des Luftreifens hat, und gemäß einer periodischen Kurve (7) zickzackförmig gewickelt wird, die der Mittellinie des Streifens (5) entspricht und mit der Umfangsrichtung (XX') des Luftreifens und in der Äquatorialebene (XZ) des Luftreifens einen Winkel A ungleich Null bildet, derart, dass:
- da zwei aufeinanderfolgende Streifenteile (51, 52, 53) je Mittellinien haben, die Extrema (S₅₁, S₅₂, S₅₃) enthalten, der Umfangsabstand (c) zwischen den Extrema (S₅₁, S₅₂, S₅₃) der jeweiligen Mittellinien von zwei aufeinanderfolgenden Streifenteilen (51, 52, 53) gleich dem Verhältnis W/sinA zwischen der Breite W des Streifens (5) und dem Sinus des Winkels A ist,
- für jede Einheit von drei aufeinanderfolgenden Streifenteilen (51, 52, 53), die aus einem ersten, einem zweiten und einem dritten Teil besteht, die jeweilige Mittellinien haben, die Extrema (S₅₁, S₅₂, S₅₃) enthalten, die jeweiligen Mittellinien der ersten und dritten Streifenteile (51, 53) sich an einem Schnittpunkt (I) schneiden, der axial mit dem Extremum (S₅₂) der Mittellinie des zweiten Streifenteils (52) ausgerichtet ist und sich axial innerhalb des Extremums (S₅₂) in einem axialen Abstand (a) mindestens gleich der Breite W des Streifens (5) befindet,
- und jeder Teil der periodischen Kurve (7), der sich axial nach innen von einem Extremum (S) der periodischen Kurve (7) bis zu einem Punkt (E) der Äquatorialebene (XZ) des Luftreifens erstreckt, einen ersten konkaven runden Teil (8) mit einem Radius R₁ enthält, der sich axial nach innen vom Extremum (S) bis zu einem zweiten konvexen runden Teil (9) mit einem Radius R₂ erstreckt, wobei der zweite konvexe runde Teil (9) mit einem Radius R₂ sich axial nach innen bis zu einem dritten geradlinigen Teil (10) erstreckt, der einen Winkel A mit der Umfangsrichtung (XX') bildet, wobei der dritte geradlinige Teil (10) sich axial nach innen bis zum Punkt (E) der Äquatorialebene (XZ) des Luftreifens erstreckt.

## Claims

1. Aircraft tyre (1) comprising:
- a working reinforcement (2) radially on the inside of a tread (3) and radially on the outside of a carcass reinforcement (4),
- the working reinforcement (2) comprising at least one working bi-ply (21) made at least in part of two radially superposed working layers (211, 212),
- each working layer (211, 212) being made up of a juxtaposition of portions (51, 52, 53) of a strip (5) of width W,
- the strip (5) being wound in a zigzag, in the circumferential direction (XX') of the tyre, onto a cylindrical laying surface (6) of radius R, having as its axis of revolution the axis of rotation (YY') of the tyre, and with a periodic curve (7),
- the periodic curve (7) corresponding to the mid-line of the strip (5) and forming, with the circumferential direction (XX') of the tyre and in the equatorial plane (XZ) of the tyre, a non-zero angle A,
- two consecutive strip portions (51, 52, 53), each having respective mid-lines comprising extrema (S₅₁, S₅₂, S₅₃),
- the circumferential distance (c) between the extrema (S₅₁, S₅₂, S₅₃) of the respective mid-lines of two consecutive strip portions (51, 52, 53) is equal to the ratio W/sinA between the width W of the strip (5) and the sine of the angle A,
- for any set of three consecutive strip portions (51, 52, 53), made up of a first, a second and a third portion having respective mid-lines comprising extrema (S₅₁, S₅₂, S₅₃), the respective mid-lines of the first and third strip portions (51, 53) intersect at an intersection point (I), axially aligned with the extremum (S₅₂) of the mid-line of the second strip portion (52) and axially on the inside of said extremum (S₅₂) at an axial distance (a) at least equal to the width W of the strip (5),
**characterized in that** any portion of the periodic curve (7), extending axially inwards from one extremum (S) of the periodic curve (7) to a point (E) on the equatorial plane (XZ) of the tyre, comprises a first, concave circular portion (8) of radius R₁, extending axially inwards from the extremum (S) to a second, convex circular portion (9) of radius R₂, the second, convex circular portion (9) of radius R₂ extending axially inwards to a third, rectilinear portion (10) forming an angle A with the circumferential direction (XX'), the third, rectilinear portion (10) extending axially inwards to the point (E) on the equatorial plane (XZ) of the tyre.

2. Aircraft tyre (1) according to Claim 1, **wherein** the intersection point (I) between the respective mid-lines of the first and third strip portions (51, 53) is positioned axially on the inside of the extremum (S₅₂) of the mid-line of the second strip portion (52) at an axial distance (a) at most equal to twice the width W of the strip (5).

3. Aircraft tyre (1) according to either of Claims 1 and 2, the periodic curve (7) comprising, at its extrema (S₅₁, S₅₂, S₅₃), a circular portion (8) of radius R₁, **wherein** the intersection point (I) between the respective mid-lines of the first and third strip portions (51, 53) is positioned axially on the inside of the extremum (S₅₂) of the mid-line of the second strip portion (52) at an axial distance (a) equal to R₁*(1-cosB) with B=asin((W/sinA)/R₁).

4. Aircraft tyre (1) according to Claim 3, **wherein** the ratio R₁/W between the radius R₁ of the concave circular portion (8) of the periodic curve (7) and the width W of the strip (5) is at least equal to 10.

5. Aircraft tyre (1) according to any one of Claims 1 to 4, **wherein** the radius R₂ of the second, convex circular portion (9) of the periodic curve (7) is equal to the radius R₁ of the first, concave circular portion (8) of the periodic curve (7).

6. Aircraft tyre (1) according to any one of Claims 1 to 5, **wherein** the angle A formed by the periodic curve (7) with the circumferential direction (XX') of the tyre and in the equatorial plane (XZ) of the tyre is at least equal to 5°.

7. Aircraft tyre (1) according to any one of Claims 1 to 6, **wherein** the angle A formed by the periodic curve (7) with the circumferential direction (XX') of the tyre and in the equatorial plane (XZ) of the tyre is at most equal to 20°.

8. Aircraft tyre (1) according to any one of Claims 1 to 7, **wherein** the width W of the strip (5) is at least equal to 2 mm, preferably at least equal to 6 mm.

9. Aircraft tyre (1) according to any one of Claims 1 to 8, **wherein** the width W of the strip (5) is at most equal to 20 mm, preferably at most equal to 14 mm.

10. Aircraft tyre (1) according to any one of Claims 1 to 9, the strip (5) being made up of reinforcers coated in an elastomeric compound, **wherein** the strip (5) comprises reinforcers made of a textile material, preferably of an aliphatic polyamide.

11. Aircraft tyre (1) according to any one of Claims 1 to 9, the strip (5) being made up of reinforcers coated in an elastomeric compound, **wherein** the strip (5) comprises reinforcers made of an aromatic polyamide.

12. Aircraft tyre (1) according to any one of Claims 1 to 9, the strip (5) being made up of reinforcers coated in an elastomeric compound, **wherein** the strip (5) comprises hybrid reinforcers made of a combination of an aliphatic polyamide and an aromatic polyamide.

13. Method for manufacturing an aircraft tyre (1) according to any one of Claims 1 to 12, comprising a step of manufacturing the working bi-ply (21), **wherein** the strip (5) is wound in a zigzag, in the circumferential direction (XX') of the tyre, onto a cylindrical laying surface (6) of radius R, having as its axis of revolution the axis of rotation (YY') of the tyre, and with a periodic curve (7) corresponding to the mid-line of the strip (5) and forming, with the circumferential direction (XX') of the tyre and in the equatorial plane (XZ) of the tyre, a non-zero angle A, such that:
- two consecutive strip portions (51, 52, 53) having respective mid-lines comprising extrema (S₅₁, S₅₂, S₅₃), the circumferential distance (c) between the extrema (S₅₁, S₅₂, S₅₃) of the respective mid-lines of two consecutive strip portions (51, 52, 53) is equal to the ratio W/sinA between the width W of the strip (5) and the sine of the angle A,
- for any set of three consecutive strip portions (51, 52, 53), made up of a first, a second and a third portion having respective mid-lines comprising extrema (S₅₁, S₅₂, S₅₃), the respective mid-lines of the first and third strip portions (51, 53) intersect at an intersection point (I), axially aligned with the extremum (S₅₂) of the mid-line of the second strip portion (52) and axially on the inside of said extremum (S₅₂) at an axial distance (a) at least equal to the width W of the strip (5),
- and, any portion of the periodic curve (7), extending axially inwards from one extremum (S) of the periodic curve (7) to a point (E) on the equatorial plane (XZ) of the tyre, comprises a first, concave circular portion (8) of radius R₁, extending axially inwards from the extremum (S) to a second, convex circular portion (9) of radius R₂, the second, convex circular portion (9) of radius R₂ extending axially inwards to a third, rectilinear portion (10) forming an angle A with the circumferential direction (XX'), the third, rectilinear portion (10) extending axially inwards to the point (E) on the equatorial plane (XZ) of the tyre.
